# EUROPÄISCHE PATENTSCHRIFT

(11) **EP 2 314 170 B1**
(45) Veröffentlichungstag und Bekanntmachung des Hinweises auf die Patenterteilung: **31.08.2011**
(21) Anmeldenummer: 09013408.1
(22) Anmeldetag: 23.10.2009
(51) Int. Cl.: A23G 1/00, A23G 1/36

(54) **Verfahren zur Erzeugung lagerstabilier Impfkristalle aus Kakaobutter bzw. Schokoladenmassen**
Method for producing storage stable seed crystals made of cocoa butter or chocolate masses
Procédé de production de germes stables en stockage en beurre de cacao ou masses de chocolat

(43) Veröffentlichungstag der Anmeldung: 27.04.2011
(73) Patentinhaber: Uelzena eG, 29525 Uelzen (DE)
(72) Erfinder: Fichtl, Peter, 29572 Ebstorf, (DE); Dietrich, Holger, 47839 Krefeld (DE); Schliehe-Dierks, Ralf, 48151 Münster (DE)
(74) Vertreter: Kossak, Sabine

(56) Entgegenhaltungen:
- EP-A1- 0 521 205
- EP-A1- 0 744 992
- WO-A1-2009/005346
- WO-A2-98/30108
- DE-A1- 19 748 069
- DE-T2- 60 313 210
- US-A1- 2005 049 426
- US-A1- 2005 082 701
- BRAUN P ET AL: "Selective precrystallisation: a revolutionary process" ZSW - ZUCKER- UND SUESSWAREN WIRTSCHAFT: FACHZEITSCHRIFT FUER ALLE BEREICHE DER SUESSWAREN-INDUSTRIE, BECKMANN VERLAG GMBH & CO. KG, DE, Bd. 55, Nr. 9, 1. Januar 2002 (2002-01-01) , Seiten 19-21, XP008120346 ISSN: 1430-2446

## Beschreibung

Gegenstand der Erfindung ist ein Verfahren zur Herstellung von Impfkristallen für Schokoladenprodukte, wobei das Verfahren die Schritte Erwärmen von Kakaobutter oder Schokoladenmassen, Mischen der erwärmten Masse mit einem überkritischen Fluid und das Entspannen der erhaltenen Lösung in einer Expansionsvorrichtung umfasst, so dass die Bildung von Pulverteilchen stattfindet und Abtrennung der Pulverteilchen vom Gas, sowie die Verwendung der erhaltenen Impfkristalle für die Herstellung von Schokoladenprodukten.

Die Herstellung von Schokolade ist trotz moderner Verfahrenstechnik ein zeitintensiver Prozess. Die wichtigsten Qualitätsmerkmale der Schokolade, wie Schmelzeigen-schaften, Bruchqualität, Konsistenz und Aussehen hängen dabei von der Kristallstruktur der Triglyceride der in der Schokolade enthaltenen Kakaobutter ab. Die Schokoladenmasse wird deshalb herkömmlicher Weise zunächst zur Bildung von Kristallen unterkühlt und anschließend wieder aufgeschmolzen, um möglichst ideale Kristallstrukturen zu erhalten. Bei diesem "Temperieren" wird die flüssige Schokoladenmasse einer kontrollierten Abfolge verschiedener Temperaturen d.h. einem abwechselnden Abkühlen und wieder Erwärmen ausgesetzt. Ziel dabei ist es, möglichst viele Kristalle in der βV-Form zu erhalten. Kakaobutter kristallisiert in 6 verschiedenen Kristallformen, die unterschiedliche Schmelzpunkte zwischen 17,3°C und 36,3°C aufweisen. Die Kristallstrukturen sind in der Reihe aufsteigender Schmelzpunkte (nach G. Böhler, Lebensmittel-Industrie Nr. 314, 2005, S. 6):

| | |
|---|---|
| γ | 0°C bis 18°C |
| α | 18°C bis 22,5°C |
| βIII | 22,5°C bis 27,5°C |
| βIV | 27°C bis 29,5°C |
| βV | 29,5°C bis 33,5 °C |
| βVI | 33,5°C bis 37°C |

Die Kristallformen y, α, βIII und βIV sind semistabil bzw. nicht stabil, weshalb diese bei der Schokoladenherstellung unerwünscht sind. Nur die Kristallformen βV und βVI, die teilweise auch als β-Form und β₂-Form bezeichnet werden, weisen die erwünschte Stabilität auf. Die βVI-Kristallstruktur führt zwar zu einer schnellen Kristallisation und Verfestigung, da sich diese im Mund allerdings wachsartig anfühlt, ist sie unerwünscht. Ein hoher Anteil an βV-Kristallen (betafünf-Kristallen) führt dagegen zu einer angenehmen Schmelze bei einer stabilen Kristallform, Durch das oben beschriebene Temperieren der flüssigen Schokoladenmasse lässt sich eine hohe Anzahl βV-Kristalle erzeugen. Damit verhält die Schokolade bessere Qualitätseigenschaften hinsichtlich Aussehen, Konsistenz und Haltbarkeit. Insbesondere bei Pralinen und gefüllten Schokoladenprodukten wird dadurch auch eine vorzeitige Fettmigration verhindert. Die Fettmigration ist als "Fettreif" zu beobachten. Fettreif wird als weißlicher Belag auf der Schokolade beobachtet. Der Fettreif entsteht dabei durch die Bildung von βVI-Kristallen auf der Oberfläche.

Zur Beschleunigung des herkömmlichen Temperierverfahrens werden teilweise bei der Herstellung von Schokoladen Impfkristalle, vorzugsweise vor dem Temperierungsprozess, der Masse beigefügt. Als Impfkristalle werden dabei beispielsweise Kakaobutterkristalle oder Schokoladenkristalle verwendet. In Abhängigkeit der Dosierung der Impfkristalle kann bei einigen Verfahren auf eine Temperierung verzichtet werden. Nach dem Ausformen, Kühlen und Verpacken zeigen die so behandelten Produkte die Eigenschaften gut temperierter Schokoladenmasse. Allerdings hat sich gezeigt, dass, sofern die Impfkristalle durch Vermahlen oder andere mechanische Zerkleinerungsprozesse erzeugt werden, die pulverförmigen Teilchen nicht die gewünschte Morphologie aufweisen, da häufig die Oberflächen nicht intakt sind und hierdurch auch unerwünschte Kristallformen vorliegen. Es gibt deshalb verschiedene Ansätze, Impfkristalle für die Schokoladenherstellung mit Hilfe nicht-mechanischer Verfahren herzustellen.

Ein solches Verfahren zur Herstellung von Impfkristallen ist in der DE 603 13 210 T2 beschrieben. Dabei wird eine gewisse Menge einer zu behandelnden Substanz in einem überkritischem Fluid gelöst und in einer zweiten Zone entspannt, wobei die zu kristallisierenden Teilchen beim Entspannen sowohl in der ersten Lösungszone als auch in der Sammelzone ausfallen. Diesem Verfahren haften jedoch die Nachteile an, dass nur ein geringer Teil der eingesetzten Kakaobutter oder Schokoladenmasse in βV-Kristalle umgewandelt wird. Je nach Verfahrensführung wird zudem ein Lösungsmittel als Cosolvens eingesetzt, das wieder abgetrennt werden muss. Zudem handelt es sich bei dem beschriebenen Verfahren um einen Batch-Prozess, der somit eine schlechtere Raum-Zeit-Ausbeute als kontinuierliche Verfahren hat.

Ein weiteres Verfahren, das bekannt ist zur Herstellung pulverförmigen Teilchen aus Fettmassen, ist das in der EP 0744992 B1 beschriebene Verfahren "Particles from gas saturated solutions" (Verfahren PGSS), bei dem in einer aufgeschmolzenen Masse eine gewisse Menge überkritisches Fluid gelöst wird. Die Masse mit dem darin gelösten überkritischen Fluid wird dann entspannt, wobei die Masse durch die Entspannung unter den Schmelzpunkt der zu behandelnden Substanz abkühlt und eine pulverförmige Substanz erhalten wird. Die Verwendung des PGSS-Prozesses zur Behandlung von Kakaobutter führt jedoch überwiegend zu der unerwünschten βVI-Form, wie sich aus "High Pressure Process Technology: Fundamentals and Applications" Abschnitt 9.8.7.2 "Cocoa butter" Seite 603 bis 604, Industrial Chemistry Library, Band 9 (2001) ergibt.

Ein weiteres Verfahren, das zur Herstellung von Impfkristallen bekannt ist, ist die Vorrichtung des "Seedmaster", wie er von Böhler in "Lebensmittelindustrie" Nr. 3 bis 4, 2005, Seiten 6 bis 7 beschrieben wird. Bei diesem Verfahren wird in die Anlage zur Herstellung der Schokolade eine zusätzliche Vorrichtung integriert, in der vorort Kakaobutterkristalle als Impfkristalle erzeugt werden. Diese werden dann direkt aus der Vorrichtung in die Anlage zur Schokoladenherstellung eingespeist. Hierdurch lässt sich ein kontinuierliches Verfahren für die Herstellung der Impfkristalle bereitstellen. Der Nachteil dieses Verfahrens ist, dass Zusatzeinrichtungen in der Anlage zur Schokoladenherstellung installiert werden müssen und eine räumliche Trennung von Impfkristallherstellung und Schokoladenherstellung nicht möglich ist, da die erhaltenen Impfkristalle keine ausreichende Stabilität hierfür aufweisen. Außerdem ist der maximal erzielbare Feststoffanteil in Form von Kakaobutterkristallen bei diesem Verfahren begrenzt und liegt bei ca. 12% m/m, so dass der überwiegende Anteil flüssige Kakaobutter ist, was rezepturbedingt zu Problemen führt.

Die WO 98/30108 A2 betrifft ein Verfahren zur Verarbeitung von Schokolade und Schokoladenprodukten, welches die Verwendung von Kristallisationsnukleatoren umfasst, um stabile Fettkristalle in einer Schokolade ohne Injizieren der Kristallisation der flüssigen Fettphase bereitzustellen. Die Zugabe der Impfkristalle erfolgt oberhalb der Erstarrungstemperatur, wodurch die Kristallisation der Fettphase bis zur endgültigen Abkühlung verschoben wird, was einen erheblichen Einfluss auf die Verarbeitungsmöglichkeiten hat. Es kann so Schokolade erhalten werden, die signifikant niedrigere Fettgehalte aufweist als üblicherweise. Das Ausmaß der Kristallisation in der Fettphase ist verringert, wobei die Kristallisationsnukleatoren nicht schmelzen. Es ist daher der Verarbeitungsbereich der Schokolade zwischen der Schokoladenerstarrungstemperatur und der Kristallisationsnukleatorschmelztemperatur gewählt. In dem ausgehärteten Schokoladenprodukt sind in der Fettphase vorzugsweise Kristalle der Form βV und βVI vorhanden. Die Herstellung von Impfkristallen ist nicht beschrieben.

In dem Artikel von Braun et al. "Selective precrystallisation: a revolutionary process", ZSW - Zucker - und Süsswaren Wirtschaft: Fachzeitschrift für alle Bereiche der Süsswaren-Industrie, Beckmann Verlag GmbH & Co. KG, 01 Januar 2002, ist ein Vorkristallisationsprozess beschrieben, bei dem Schokoladenmasse durch Animpfen mit einer Kakaobutterkristallsuspension vorkristallisiert wird. Bei dem Verfahren wird Kakaobutter in einem Tank bei etwa 40 bis 50°C geschmolzen und anschließend bei einer Kühlwassertemperatur von 5 bis 15°C scherkristallisiert. Die scherkristallisierte Kakaobutter wird zurückbehaltener Kakaobutter zugeführt. Das Vermischen erfolgt bei einer Kühlwassertemperatur von 24 bis 28° C, wobei die Mischung etwa 100 Minuten lang bei dieser Temperatur gehalten wird. Als Impfkristalle werden überwiegend solche in βVI-Modifikation erhalten.

Auch die US 2005/049426 A1 beschreibt ein Verfahren und eine Vorrichtung zur Herstellung von auf einer Fettschmelze basierten Impfkristallsuspensionen, wobei das Verfahren insbesondere der Erzeugung mikrodisperser Kakaobutterkristallsuspensionen mit hohem βVI - Modifikationsanteil dient. Als Verwendung für die Kakaobutterkristallsuspensionen ist die Impfkristallisation von fettbasierten, disperse Feststoffpartikel enthaltenden Suspensionen wie schokoladen- und schokoladenähnlichen Massen oder dergleichen beschrieben, wobei die Schmelze mit den Kristallkeimsuspensionen geimpft wird.

Die DE 197 48 069 A1 ist auf ein Verfahren zum Abkühlen und Zerstäuben von flüssigen oder pastösen Stoffen oder Stoffgemischen gerichtet, bei dem ein flüssiger oder pastöser Stoff bzw. ein solches Stoffgemisch mit flüssigem oder überkritischem Kohlenstoffdioxid zusammengeführt wird und anschließend das Gemisch aus flüssigem oder pastösem Stoff/Stoffgemisch und flüssigem oder überkritischem Kohlenstoffdioxid entspannt wird.

Die US 2005/082701 A1 beschreibt ein Verfahren und eine Vorrichtung zur Partikelbildung, wobei in dem Verfahren ein überkritisches Fluid benutzt wird. In einem ersten Schritt werden das Material, aus welchem feine Partikel gebildet werden sollen, und das überkritische Fluid in einer ersten Kammer miteinander vermischt. Die Mischung wird geschmolzen. In einem zweiten Schritt wird die Schmelze in eine zweite Kammer überführt, weiteres überkritisches Fluid wird zugesetzt, ehe die Mischung der niedrigviskoseren Schmelze in eine Expansionskammer expandiert wird, wobei die Expansionskammer einen Druck unterhalb des kritischen Drucks des überkritischen Fluids ausweist, um das überkritische Fluid in ein Gas zu konvertieren und das Material in Partikelform abzuscheiden. Als Material, aus welchem Partikel gebildet werden sollen, sind biologisch aktive Materialen wie Peptide und Insektizide und biologisch abbaubare Polymere, z.B. Polycaprolacton, genannt. Dieses und die zuvor genannten Verfahren liefern keine oder nur geringe Anteile an βVI-Kristallen bei der Herstellung von Impfkristallen aus Kakaobutter.

Die WO 2009/005346 A1 beschreibt eine Methode zur Herstellung von Partikeln im Lebensmittelbereich aus einem Lipid und einer wasserlöslichen aktiven Substanz, welche das Dispergieren oder Emulgieren der aktiven Substanz in dem Lipid, das anschließende Vermischen mit einem überkritischen oder gasförmigen Medium und das Versprühen der Mischung umfasst. Reaktionsbedingungen, unter denen eine besonders vorteilhafte Kristallisationsform erhalten wird, sind nicht genannt.

Die EP 0 521 205 A1 beschreibt ein Verfahren zur Verwendung von Impfkristallen zur Herstellung getemperter Süßwaren. Das Verfahren sieht vor, dass eine kontinuierliche Zugabe von Kristallkeimen in Form einer Suspension zu der flüssigen Süßwarenzusammensetzung erfolgt. Anlagen, die kontinuierlich arbeiten, sind in der Regel mit höheren Investitionskosten verbunden als diskontinuierliche Anlagen. Das Verfahren gemäß der EP 0 521 205 A1 erfordert, dass die Vorrichtung zur kontinuierlichen Zugabe der Kristallkeime direkt mit der Anlage zur Schokoladenherstellung gekoppelt wird; auch hier sind also Zusatzeinrichtungen in der Anlage zur Schokoladenherstellung erforderlich.

Aufgabe der vorliegenden Erfindung ist es daher, ein Verfahren zur Herstellung von Impfkristallen bereitzustellen, die als lagerstabile Teilchen in Pulverform vorliegen und einen hohen Anteil an βV-Kristallen aufweisen. Diese Pulver soll fein und leicht in der Schokoladenschmelze zu verteilen sein. Das Verfahren soll hohe Raum-Zeit-Ausbeuten aufweisen und ohne zusätzliche Lösemittel oder Chemikalien auskommen. Das Verfahren soll zudem kostengünstig und umweltfreundlich durchführbar sein. Das erfindungsgemäße Verfahren soll auch räumlich unabhängig vom Schokoladenherstellungsprozess ausführbar sein, da die hergestellten Impfkristalle entsprechend lagerstabil sind. Die hergestellten Impfkristalle sollen zu Schokoladen mit gutem Schmelz, Aussehen und guten organoleptischen Eigenschaften führen.

Die Aufgabe wird erfindungsgemäß gelöst durch ein Verfahren zur Herstellung von Impfkristallen für Schokoladenprodukte, wobei das Verfahren folgende Schritte umfasst:
A. Erwärmen von Kakaobutter, bis eine Flüssigkeit entsteht oder Erwärmen von Schokoladenmassen, bis eine Suspension oder Flüssigkeit entsteht,
B. Mischen der geschmolzenen Masse mit einem überkritischen Fluid unter Druck,
C. Entspannen der erhalten Lösung in einer Expansionsvorrichtung, so dass die Bildung von Pulverteilchen aus Kakaobutter oder Schokolade stattfindet und
D. Abtrennung der Pulverteilchen vom Gas,
   dadurch gekennzeichnet, dass
E. die gemäß Schritt D erhaltenen Kakaobutterteilchen oder Schokoladenpulverteilchen für eine Zeitspanne vom mindestens 2 Tagen bei einer Temperatur von 15°C bis 25°C gelagert werden und
   - das Verfahren gemäß der Schritte A bis D kontinuierlich geführt wird und
   - das Mischungsverhältnis von geschmolzener Masse zu überkritischem Fluid 1:1 bis 2:1 bezogen auf die Masse des Fluids und der geschmolzenen Substanz beträgt und
   - das erhaltene Kakaobutterpulver oder Schokoladenpulver einen sehr hohen Anteil βV-Kristalle enthält, beispielsweise über 95% m/m bezogen auf den kristallinen Anteil.

Weitere Ausführungsformen sind Gegenstand der Unteransprüche oder nachfolgend beschrieben.

Unter "Kakaobutter" im Sinne der Erfindung wird das Fett der Kakaobohne verstanden.

Unter "Schokoladenmasse" werden Massen verstanden, welche Kakaobutter, Zucker, andere Fett- oder Nichtfettsubstanzen pflanzlicher oder tierischer Herkunft umfassen. Unter "geschmolzener Masse" wird im Sinne der Erfindung die gemäß Verfährensschritt A erwärmte Kakaobutter, die als Flüssigkeit vorliegt und die erwärmte Schokoladenmasse, die als Suspension oder Flüssigkeit vorliegt, verstanden. Die geschmolzene Masse kann somit eine Flüssigkeit oder eine Suspension fester Teilchen in einer Flüssigkeit, z.B. in flüssigem Fett, darstellen.

Unter "überkritischem Fluid" im Sinne der Erfindung werden kompressible Gase im überkritischen Zustand verstanden. Unter "überkritisch" wird dabei verstanden, dass diese Gase oberhalb der kritischen Temperatur vorliegen, so dass Flüssigkeit und Gas nicht mehr unterschieden werden können, weshalb von überkritischem Fluid gesprochen wird.

Unter "Impfkristallen" im Sinne der Erfindung werden feine, pulverförmige Teilchen mit einem hohen kristallinen Anteil verstanden. Die erfindungsgemäßen Impfkristalle beruhen dabei auf Kakaobutter bzw. Schokoladenmasse.

Nach dem Erwärmen der Kakaobutter bzw. dem Erwärmen der Schokoladenmasse wird die geschmolzene Masse in Schritt B vorzugsweise in einem Mischer bevorzugt mit statischen Mischelementen mit dem überkritischen Fluid vermischt. Es ist auch möglich, das überkritische Fluid und die erwärmte Kakaobutter bzw. die erwärmte Schokoladenmasse mit anderen herkömmlichen Mischern, beispielsweise einem Rührelement, zu vermischen.

Beim erfindungsgemäßen Verfahren wird das überkritische Fluid unter einem Druck, der leicht über oder unter dem kritischem Druck des Fluids liegt, mit der geschmolzenen Masse vermischt. Das Mischungsverhältnis von Kakaobutter bzw. von Schokolade zu überkritischem Fluid beträgt dabei 1:1 bis 2 : 1, d.h. es wird nur soviel Fluid in der geschmolzenen Kakaobutter bzw. in der geschmolzenen Schokolade gelöst, dass maximal ein gleiches Massenverhältnis von geschmolzener Kakaobutter bzw. Schokolade zu überkritischem Fluid vorliegt.

Dieses Verhältnis beeinflusst die Teilchenmorphologie und die Kristallform im Endsubstrat. Anders als bei herkömmlichen Verfahren, bei denen eine geringe Menge geschmolzener Substanz in einer großen Menge überkritischem Fluid aufgelöst wird, wird beim vorliegenden Verfahren das Gas in der geschmolzenen Substanz gelöst und nicht umgekehrt.

Nach dem Mischen der flüssigen Kakaobutter bzw. der flüssigen oder suspendierten Schokoladenmasse mit dem überkritischen oder leicht unterkritischen Fluid wird die Mischung entspannt. Durch das Entspannen wird das Fluid wieder in den gasförmigen Zustand versetzt und kühlt hierbei ab. Bei der Abkühlung wird der Schmelzpunkt der Kakaobutter bzw. der Schokoladenmasse unterschritten, so dass diese in Form von Pulverteilchen ausfällt. Erfindungsgemäß wird als Expansionsvorrichtung für das Entspannen der erhaltenen Lösung aus Fluid und geschmolzener Masse ein Sprühturm verwendet. Der Sprühturm hat bei einem Volumen von 1 bis 3m³ vorzugsweise eine Expansionsdüse mit einem Durchmesser von 1,0 bis 2,0 mm.

Die Pulverteilchen werden abgepackt und unter definierten Temperaturbedingungen gereift. Während dieser Reifung formen sich stabile Fettkristalle überwiegend in der βV-Form, die dann, wie andere pulverisierte Substanzen, den Schokoladenherstellern zur Verfügung gestellt werden können.

Als überkritische Fluide werden bevorzugt Kohlenstoffdioxid oder kurzkettige Alkane mit 1 bis 4 Kohlenstoffatomen, wie beispielsweise Methan, Ethan, Propan, n-Butan oder Iso-Butan eingesetzt. Besonders bevorzugt wird als überkritisches Fluid Kohlenstoffdioxid verwendet, bevorzugt bei Drücken zwischen 5.000 kPa bis 20.000 kPa, besonders bevorzugt 11.000 kPa.

Das erfindungsgemäße Verfahren führt zu lagerstabilen Impfkristallen für Schokoladenprodukte, die einen hohen Anteil an βV-Kristallen enthalten. Bevorzugt weisen die pulverförmigen Partikel der Impfkristalle eine Größe zwischen 1 µm und 50 µm auf, besonders bevorzugt von 10 µm bis 50 µm. Feinere Pulver lassen sich besser in die Schokoladenschmelze emulgieren und liefern bei gleicher Einwaage als Kristallisationsstarter eine größere Anzahl an Kristallisationskeimen. Es hat sich gezeigt, dass es erfindungsgemäß wesentlich ist, die erhaltenen Pulverteilchen aus Kakaobutter oder Schokoladenmasse im Anschluss an die Herstellung mindestens 2 Tage bei einer Temperatur von 15 bis 25 °C zu lagern. Dabei sind Lagerungsbedingungen von 17 bis 20°C und Lagerzeiträume von 2 bis 20 Tagen besonders vorteilhaft. Besonders bevorzugt wird eine Lagerung bei 17 bis 20°C für 14 Tage durchgeführt. Durch die Lagerung (Schritt E) erfolgt eine weitere Reifung der Pulverteilchen, wobei das Produkt restlos auskristallisiert und während der Reifung die endgültige Kristallbildung erfolgt. Die Lagerung kann dabei räumlich unabhängig von der kontinuierlichen Herstellung der pulverförmigen Impfkristalle erfolgen.

Zu Beginn des erfindungsgemäßen Verfahrens wird zunächst als Ausgangssubstanz Kakaobutter bzw. Schokoladenmasse erwärmt (Schritt A). Das Erwärmen erfolgt beispielsweise in einem Lösebehälter, wobei aus der Kakaobutter eine Flüssigkeit entsteht und aus der Schokoladenmasse abhängig von der gewählten Temperatur eine Flüssigkeit oder ein Suspension von festen Teilchen in einer Flüssigkeit, wobei sich beispielsweise nur der Fettanteil in der Schokoladenmasse löst. Das Erwärmen im Lösebehälter erfolgt bevorzugt bei einer Temperatur von über 40°C. Ebenso erfolgt das Mischen der Kakaobutterflüssigkeit oder Schokoladenflüssigkeit bzw. Suspension mit dem Fluid bei Temperaturen über 40°C.

Das erfindungsgemäße Verfahren hat den Vorteil, dass es die Herstellung von Impfkristallen ohne Zusatz von Chemikalien oder Lösungsmitteln erlaubt. Die erhaltenen Impfkristalle sind entsprechend frei von Verunreinigungen durch Fremdsubstanzen. Durch die im Verfahren beschriebene Expansion wird zudem ein mikrobiologischer Abtötungseffekt erreicht, der ebenfalls die Stabilität der erfindungsgemäß hergestellten Impfkristalle positiv beeinflusst. Durch die Herstellung der Pulver in einem kontinuierlichen Verfahren werden gegenüber bisherigen Batch-Prozessen höhere Raum-Zeit-Ausbeuten erzielt, so dass das Verfahren die kostengünstigere Herstellung der Impfkristalle erlaubt. Die Herstellung der Impfkristalle erfolgt dabei räumlich unabhängig von der Schokoladenherstellung, so dass für die Schokoladenherstellung keine zusätzlichen Vorrichtungen installiert werden müssen. Die erfindungsgemäß hergestellten Impfkristalle lassen sich aufgrund ihrer Teilchengröße und Teilchenmorphologie ohne größeren maschinellen Aufwand den Schokoladenmassen zudosieren.

Gegenstand der Erfindung ist weiterhin die Verwendung der erfindungsgemäß hergestellten Impfkristalle in Mengen von mindestens 0,1%, bevorzugter Weise bis ca. 1 Gew.-% bezogen auf die Schokoladenmasse zur Schokoladenherstellung. Die Impfkristalle können dabei in flüssigen Schokoladenmassen eingesetzt werden, üblicher Weise bei Temperaturen von ca. 28°C bis 33°C, insbesondere wenn niedrige Viskositäten beim Ausformen technisch notwendig sind, z.B. Höhlkörperfigurherstellung oder Pralinen, kann mit höheren Temperaturen gearbeitet werden ohne auf Vorteile temperierter Schokolade verzichten zu müssen.

Die unter Verwendung der erfindungsgemäß hergestellten Impfkristalle erhaltenen Schokoladenmassen haben hervorragende organoleptische Eigenschaften, eine gute Schmelze, Haltbarkeit, geringe bzw. keine Fettreifbildung, gute Bruch- bzw. Konsistenz-Eigenschaften. Die vorteilhaften Eigenschaften zeigen sich auch bei der Verwendung für die Pralinenherstellung, insbesondere beim in der Pralinenherstellung üblichen "one-shot-Verfahren".

Es konnte zudem beobachtet werden, dass durch den Einsatz der erfindungsgemäßen Impfkristalle die Temperierzeiten der Schokolade deutlich verkürzt werden können. So wurden Kristallisationszeiten von 22 bis 90 Minuten nach bisherigem Stand der Technik auf 2 bis 35 Minuten unter Einsatz des erfindungsgemäßen Kakaobutterpulvers verkürzt. Hieraus ergeben sich deutliche Energie- und Prozesskosteneinsparungen. Anders als bei bekannten Prozessen ist es zudem nicht notwendig Zusatzvorrichtungen zu installieren. Die so gewonnenen Schokoladenmassen zeigen zudem ein besseres Ablöseverhalten, was wiederum Vorteile bei der Herstellung beinhaltet.

Ein weiterer Vorteil ist, dass die Impfkristalle aus derselben Schokoladenmasse erzeugt werden können wie das Endprodukt. Somit ist keine Veränderung der Rezeptur notwendig, da sich die Zusammensetzung bzw. der Kakaobutteranteil bei der Zugabe der Impfkristalle aus derselben Schokoladenmasse nicht verändert. Auch die organoleptischen Eigenschaften werden durch den Zusatz der Impfkristalle aus Schokolade nicht verändert. Bei herkömmlichen Verfahren, bei denen Impfkristalle aus Kakaobutter in deutlich größeren Mengen als 1 Gew.-% zugesetzt werden, erfolgt sonst immer eine Veränderung der Rezeptur, was die Schokoladenherstellung negativ beeinflussen kann bzw. eine Veränderung oder eine Anpassung der Rezeptur erfordert.

Beim erfindungsgemäßen Verfahren wird das gesamte Ober die Expansionsdüse versprühte Gemisch in pulverförmige Kristalle bzw. pulverförmige Teilchen umgewandelt mit einer polymorphen Kristallform und hoher spezifischer Oberfläche.

Überraschenderweise werden mit dem erfindungsgemäßen Verfahren Impfkristalle mit einem hohen βV-Anteil erhalten. Anders als in der Literatur beobachtet, führt die erfindungsgemäße Verfahrensführung dazu, dass nicht, wie in der Literatur für das herkömmliche PGSS-Verfahren beschrieben, nur βVI-Kristalle erzeugt werden. ("High Pressure Process Technology: Fundamentals and Applications", Abschnitt 9.8.7.2 "Cocoa butter" ,Seite 603 bis 604, Industrial Chemistry Library, Band 9 (2001)).

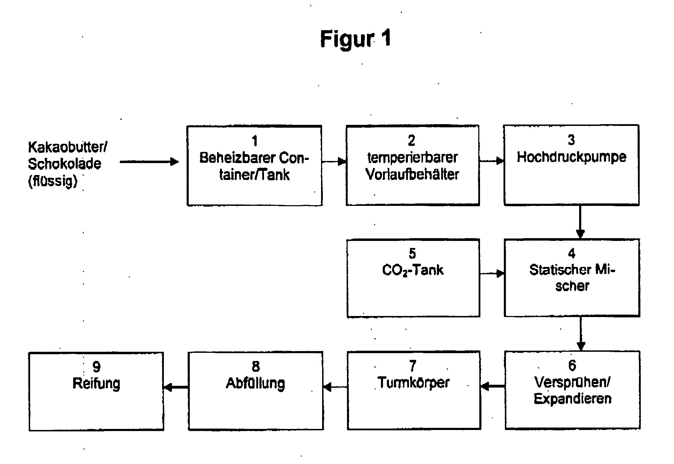

Das erfindungsgemäße Verfahren wird anhand Fig. 1 beispielhaft näher erläutert. Fig. 1: Verfahrensfließbild zur Herstellung der Impfkristalle

Figur 1 zeigt den schematischen Ablauf der erfindungsgemäßen Herstellung der Impfkristalle. Aus einem beheizbaren Tank 1 wird flüssige Kakaobutter bzw. flüssige Schokolade in einen temperierbaren Vorlaufbehälter 2 geleitet. In dem Vorlaufbehälter 2 wird Kakaobutter auf etwa 40°C erwärmt. Die erwärmte Kakaobutter wird über eine Rohrleitung mit Hilfe der Pumpe 3 zu einem Mischer 4 mit statischen Mischele- . menten geleitet. In einem weiteren Vorlagegefäß 5 wird Kohlenstoffdioxid im flüssigen Zustand gelagert. Das flüssige Kohlenstoffdioxid wird über eine Rohrleitung ebenfalls zum Mischer 4 geleitet. Der Mischer ist auf eine Temperatur von 40°C temperiert. Nach dem Vermischen im Mischer 4 wird die mit Fluid vermengte Kakaobutterschmelze/Schokoladenschmelze über die Expansionsdüse in den Sprühturm 6 expandiert. Das erhaltende Pulver wird am Fuß des Sprühturms 7 oder Gas/Pulverabscheider (Zyklon) gesammelt. Das Pulver wird direkt in Behälter 8 abgefüllt. Das abgefüllte Produkt wird dann in einem Lagerraum 9 für 14 Tage bei 15° bis 25°C weiter gereift.

Die Erfindung wird anhand der nachfolgenden Beispiele weiter erläutert, ohne sie auf diese zu beschränkten.

### Beispiel 1

Die nachfolgende Tabelle zeigt die Versuchsbedingungen für die Beispiele 3 bis 10. Die Versuche 3 bis 7 sind dabei Vergleichsversuche, während die Beispiele 8 bis 10 erfindungsgemäß sind.

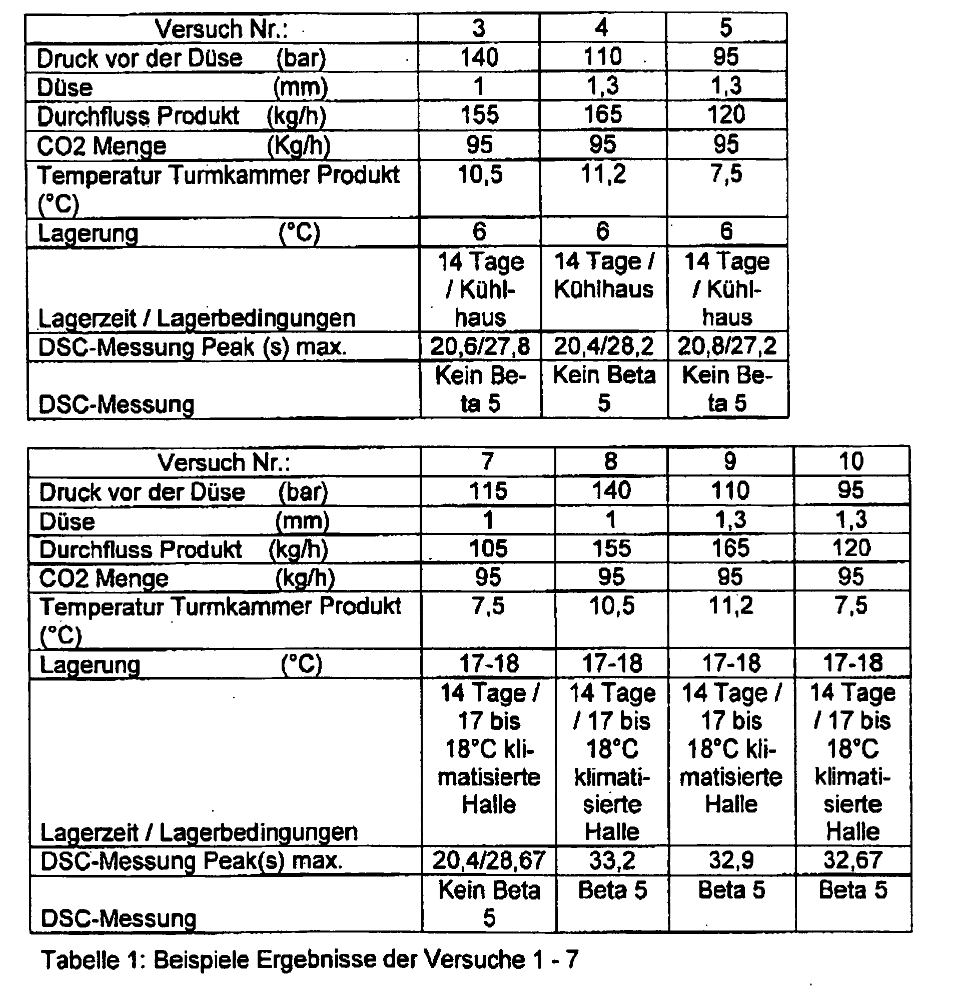

Es zeigt sich, dass durch die Lagerung bei Temperaturen von 17 bis 18°C für 14 Tage messbare Anteile von βV-Kristallen gebildet werden, während bei anderen Lagerungsbedingungen von unter identischen Bedingungen hergestellten Kakaobutterpulvern keine βV-Kristalle gebildet werden (Vergleichsversuche 4, 5, 3). Zudem ist aus dem Vergleich von Versuch 7 zu Versuch 8 erkennbar, dass eine deutlich höhere Menge Substanz als das Fluid Kohlenstoffdioxid verwendet werden muss, damit sich βV-Kristalle bilden.

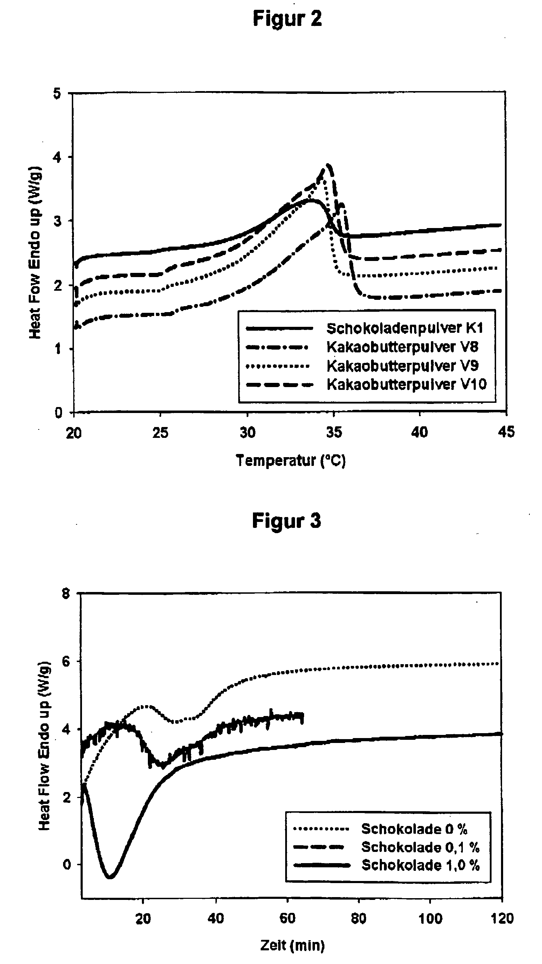

Fig. 2 zeigt typische Schmelzkurven von Kakaobutterpulver und Schokoladenpulver die erfindungsgemäß hergestellt wurden. Der Schmelzpeak mit Maximum bei ca. 33,5°C lässt nur Kristallform βV erkennen. Die Pulver sind damit selbst zu relativen 100% bezogen auf den kristallinen Anteil im stabilen Zustand und als Impfkristallisat geeignet. Erwartungsgemäß sind die Peakflächen (Schmelzenthalpien) der Schokoladenpulver kleiner als der reinen Kakaobutter, sie entsprechen den Fettgehalten.

Fig. 2: DSC-Schmelzkurven des Schokoladenpulvers und der Kakaobutterpulver

### Kristallisationskinetik im DSC

Westafrikanische Kakaobutter wurde bei 60°C geschmolzen und dann auf 30°C abgekühlt. In diesem unterkühlten Zustand ist die Schmelze einige Stunden haltbar-Teile wurden abgezweigt und bei 30°C mit 2% bzw. 0,1% erfindungsgemäß hergesteiltem Kakaobutterpulver versetzt. Als Vergleich diente ungeimpfte KakaobutterSchmelze.

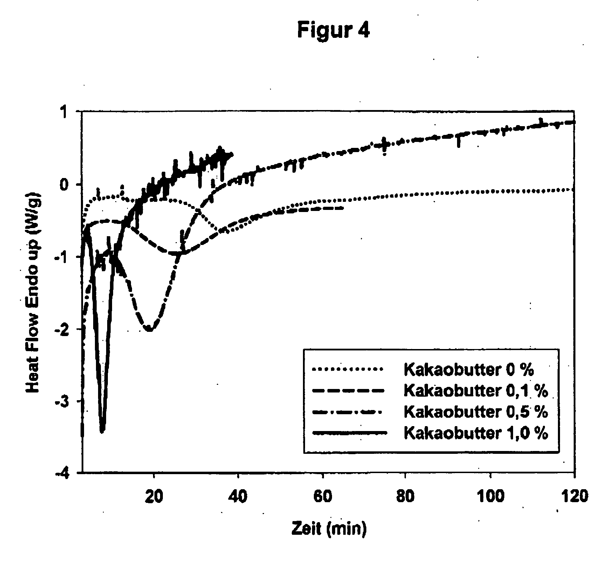

Die Proben wurden einzeln bei 27°C in ein DSC-Pfännchen eingewogen und im DSC rasch auf 20,5 °C bei Schokoladenpulver bzw. 19 °C bei Kakaobutterpulver abgekühlt und dort isotherm gehalten. Bei 20,5 °C bzw. 19 °C wurde der Kristallisationsverlauf im DSC anhand der entwickelten Kristallisationswärme bestimmt. Die Tabellen 2 und 3 zeigen die erhaltenen Daten. Die entsprechenden DSC-Kristallisationskurven sind in Fig. 3 und Fig. 4 zusammengestellt. Es zeigen:
Fig. 3: DSC-Kristallisationskurven von mit Schokoladenpulver angeimpfter und nicht angeimpfter Schokolade
Fig. 4: DSC-Kristallisationskurven von mit Kakaobutter angeimpfter und nicht angeimpfter Kakoabutter

**Tabelle 2: Kristallisationszeiten von mit erfindungsgemäß hergestelltem Schokoladenpulver angeimpfter und nicht angeimpfter Schokoladen.**

| Konzentration Schokoladenpulver in Schokolade | Beginn der Kristallisation (Onset) | Maximum der Kristallisation | Abschluss der Kristallisation |
|---|---|---|---|
| 0 % | ca. 22 min | ca. 33 min | ca. 90 min |
| 0,1 % | ca. 11 min | ca. 25 min | ca. 50 min |
| 1,0 % | ca. 2 min | ca. 11 min | ca. 35 min |

**Tabelle 3: Kristallisationszeiten von mit erfindungsgemäß hergestelltem Kakaobutterpulver angimpfter und nicht angeimpfter Kakaobutter**

| Konzentration Kakaobutterpulver in Kakaobutter | Beginn der Kristallisation (Onset) | Maximum der Kristallisation | Abschluss der Kristallisation |
|---|---|---|---|
| 0% | ca. 26 min | ca. 37 min | ca. 70 min |
| 0,1% | ca. 13 min | ca. 26 min | ca. 60 min |
| 0,5% | ca. 11 min | ca. 19 min | ca. 50 min |
| 1,0% | ca. 5 min | ca. 8 min | ca. 30 min |

Das erfindungsgemäß hergestellte Pulver führt zu einer Beschleunigung der Kristallisation.

### Dispersionsverhalten und Produktqualität

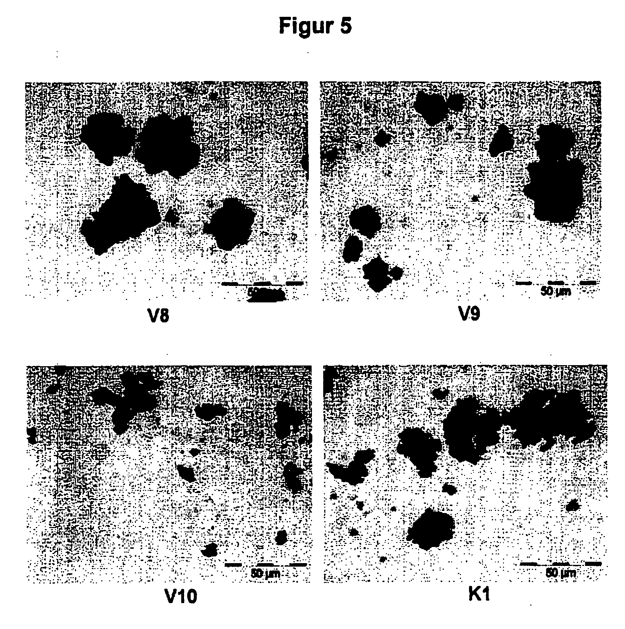

In Fig. 5 sind die mikroskopischen Aufnahmen der Kakaobutterpulver und des Schokoladenpulvers, die erfindungsgemäß hergestellt wurden, abgebildet. V10 und das Schokoladenpulver K1 zeigen im mikroskopischen Bild die feinsten Pulver. Je feiner das Pulver desto besser lässt es sich in der Schokoladenschmelze dispensieren. Des Weiteren liefern feinere Pulver bei gleicher Einwaage als Kristallisationsstarter eine größere Anzahl an Kristallisationskeimen. Dieses sollte die Geschwindigkeit der Kakaobutterkristallisation erhöhen

0,1 bis 1%, bezogen auf die Gesamtmasse, erfindungsgemäß hergestelltes Kakaobutterpulver oder Schokoladenpulver wurden in eine unterkühlte Kakaobutterschmelze bei 30°C eingerührt. Das Pulver konnte ohne Probleme oder Verklumpen fein dispergiert werden, so dass stabile Dispersionen entstanden. Das Pulver schmilzt dabei nicht in der Kakaobutterschmelze auf. Die erfindungsgemäß hergestellten Impfkristalle sind entsprechend gut bei der Schokoladenherstellung zu verarbeiten.

### Beispiel 3

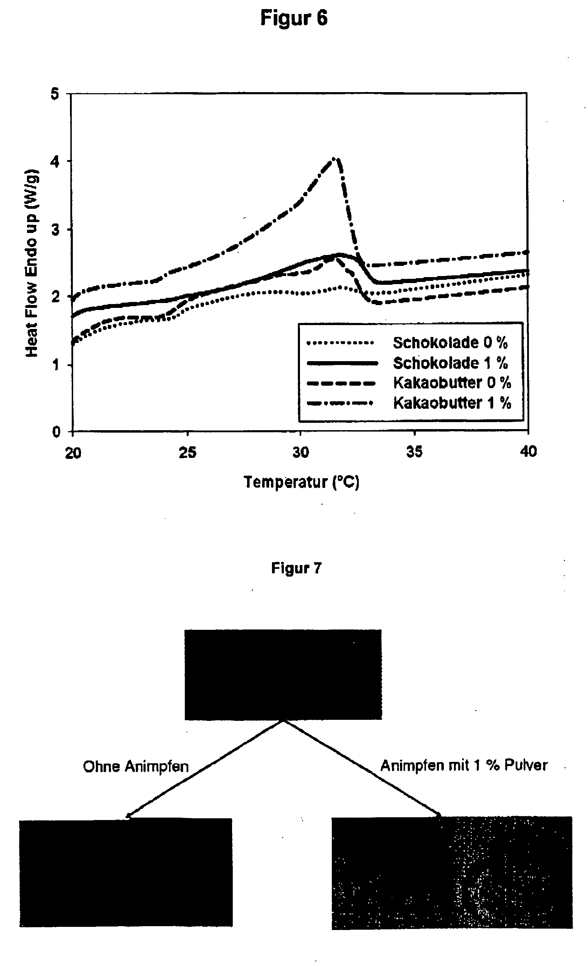

Es wurden eine ungeimpfte und eine mit 2% geimpfte Kakaobutterschmelze bei 30°C in kleine Petrischalen dosiert und auf 20°C gekühlt, Die geimpfte Probe kristallisierte und verfestigt sich sofort zu einer dichten, glänzenden Scheibe. Diese Scheibe lässt sich leicht aus der Petrischale lösen, da die entstandene Kristallform βV eine hohe Dichte aufweist und gegenüber der Schmelze im Volumen kontrahiert ist. Die ungeimpfte Schmelze bildet bei 20°C ein weiches Fett, das sich nicht aus der Form lösen lässt wie aus Fig. 7 erkennbar ist. Dieses entspricht bekanntlich einer Mischform aus αIII und βIV

### Beispiel 4

Schokolade und Kakaobutter wurden bei 60 °C geschmolzen und anschließend auf 30 °C abgekühlt. Dann wurden sie mit 0 % oder 1 % des jeweiligen Pulvers angeimpft und in Kunststoffschalen gegossen und bei 7 °C zum Erstarren gelagert. Von den erstarrten, ausgeformten Produkten wurden Schmelzkurven im DSC ermittelt. Diese sind in Fig. 6 dargestellt
Fig. 6: DSC-Schmelzkurven angeimpfter und nicht angeimpfter, erstarrter Schokolade und Kakaobutter
Fig. 7: Angeimpfte und nicht angeimpfte Schokolade und Kakaobutter vor und nach Erstarrung

Die DSC-Schmelzkurven zeigen deutlich den Effekt des Animpfens mit Schokoladen- bzw. Kakaobutterpulver. Durch das Animpfen kristallisieren die ausgeformten Produkte in hohem Maße in der gewünschten ßV Form. Die nicht angeimpften Produkte kristallisieren in verschiedenen Kristallformen darunter ßIV und in geringem Maße ßV. Nur die angeimpften Produkte lassen sich nach Erstarren nach ca. 30 min leicht aus der Form stürzen. Diese Kontraktion der erstarrten Schokoladen- bzw. Kakaobutterformen ist ebenfalls ein Effekt von richtiger und in der Schokoladenproduktion erwünschter Kristallisation in ßV Form.

Die vollständige Kristallisation in ßV Struktur konnte in den angeimpften Produkten mit DSC nachgewiesen werden. In den nicht angeimpften Produkten kristallisiert die Kakaobutter nur zu geringen Anteilen in ßV. Die Kristallisationswerte sind in Tabelle 4 dargestellt.

**Tabelle 4: Kristallanteile in den angeimpften und nicht angeimpften Schokoladen und Kakaobutter.**

| | Relativer Anteil β'(IV) | Relativer Anteil β(V) | Festfettgehalt gesamt |
|---|---|---|---|
| Kakaobutter angeimpft | - | 100 % | 86 % * |
| Kakaobutter nicht angeimpft | 83 % | 17 % | 63 % * |
| Schokolade angeimpft | - | 100 % | 85 % **) |
| Schokolade nicht angeimpft | 93 % | 7 % | 70 % **) |

| | | | |
|---|---|---|---|
| *) berechnet mit Standardwerten für Kakaobutter-Kristalle (ßIV: 119 J/g und βV: 137 J/g) nach Lit. Schenkel, Rufer. ZSW 1983. **) bezogen auf einen geschätzten Fettgehalt von 32 % | | | |

Das Schokoladenpulver und die Kakaobutterpulver bringen die erwartete Beschleunigung der Kristallisation in richtiger Kristallmodifikation ßV.

## Patentansprüche

1. Verfahren zur Herstellung von Impfkristallen für Schokoladenprodukte, wobei das Verfahren folgende Schritte umfasst:
A. Erwärmen von Kakaobutter, bis eine Flüssigkeit entsteht oder Erwärmen von Schokoladenmassen, bis eine Suspension oder Flüssigkeit entsteht,
B. Mischen der geschmolzenen Masse mit einem überkritischen Fluid unter Druck,
C. Entspannen der erhalten Mischung in einer Expansionsvorrichtung, so dass die Bildung von Pulverteilchen aus Kakaobutter oder Schokolade stattfindet und
D. Abtrennung der Pulverteilchen vom Gas, **dadurch gekennzeichnet, dass**
E. die erhaltenen Kakaobutterteilchen oder Schokoladenpulverteilchen für eine Zeitspanne vom mindestens 2 Tagen bei einer Temperatur von 15 bis 25°C gelagert werden und
- das Verfahren gemäß der Schritte A bis D kontinuierlich geführt wird und
- das Mischungsverhältnis von geschmolzener Masse zu überkritischem Fluid 1:1 bis 2 :1 bezogen auf die Masse des Fluids und der geschmolzenen Substanz beträgt und
- das nach Schritt E erhaltene Kakaobutterpulver oder Schokoladenpulver mindestens 50 Gew.-% βV-Kristalle enthält bezogen auf die kristallinen Anteile.

2. Verfahren gemäß Anspruch 1, **dadurch gekennzeichnet, dass** das Mischen gemäß Schritt B in einem Mischer, bevorzugt in einem Mischer mit statischen, Mischelementen erfolgt.

3. Verfahren gemäß Anspruch 1 oder 2, **dadurch gekennzeichnet, dass** die Expansionsvorrichtung ein Sprühturm ist, vorzugsweise mit einer Expansionsdüse mit einem Durchmesser von 1,0 bis 2.0mm.

4. Verfahren gemäß einem der vorhergehenden Ansprüche, **dadurch gekennzeichnet, dass** das überkritische Fluid ausgewählt ist aus der Gruppe Kohlenstoffdioxid oder kurzkettigen Alkanen mit 1 bis 4 Kohlenstoffatomen .

5. Verfahren gemäß einem der vorhergehenden Ansprüche, **dadurch gekennzeichnet, dass** das verwendete Gas Kohlenstoffdioxid ist und vorzugsweise bei einem Druck zwischen 5.000 und 20.000 kPa besonders bevorzugt 11.000 kPa verwendet wird.

6. Verfahren gemäß einem der vorhergehenden Ansprüche, **dadurch gekennzeichnet, dass** die erhaltenen pulverförmigen Partikel eine Größe zwischen 1 µm und 50 µm haben, vorzugsweise 10 µm - 50 µm.

7. Verfahren gemäß einem der vorhergehenden Ansprüche, **dadurch gekennzeichnet, dass** die Lagerung gemäß Verfahrensschritt E. bei einer Temperatur von 15°C bis 25°C durchgeführt wird.

8. Verfahren gemäß einem der vorhergehenden Ansprüche, **dadurch gekennzeichnet, dass** die Lagerung gemäß Verfahrensschritt E. über eine Zeitspanne von mind. 2 Tagen, vorzugsweise 14 Tage erfolgt.

9. Verfahren gemäß einem der vorhergehenden Ansprüche, **dadurch gekennzeichnet, dass** in Schritt A ein Lösebehälter zum Erwärmen der Vorlagesubstanz verwendet wird, der die Vorlagesubstanz auf eine Temperatur > 40°C temperiert.

10. Verfahren gemäß einem der vorhergehenden Ansprüche, **dadurch gekennzeichnet, dass** in einem weiteren Verfahrensschritt mind. 0,1 Gew.-% der erhaltenen pulverförmigen Partikel einer Schokoladenmasse zugesetzt werden und die Schokoladenmasse auskristallisiert.

11. Verfahren gemäß einem der vorhergehenden Ansprüche, **dadurch gekennzeichnet, dass** Schokoladenmassen eingesetzt werden, die als Fettanteil nur Kakaobutter enthalten oder Massen, in denen Kakaobutter ganz oder teilweise durch andere pflanzliche Fette ersetzt ist.

## Claims

1. A process for the production of seed crystals for chocolate products,
wherein the process comprises the following steps:
A. heating of cocoa butter until a liquid is formed or heating of chocolate masses until a suspension or liquid is formed,
B. mixing of the molten mass with a supercritical fluid under pressure,
C. expansion of the obtained mixture in an expansion device, so that the formation of powder particles of cocoa butter or chocolate takes place and
D. separation of the powder particles from the gas, **characterised in that**
E. the obtained cocoa-butter particles or chocolate-powder particles are stored for a time period of at least 2 days at a temperature from 15 to 25°C and
- the process according to steps A to D is carried out continuously and
- the mixing ratio of molten mass to supercritical fluid is 1:1 to 2:1 related to the mass of the fluid and of the,molten substance and
- the cocoa-butter powder or chocolate powder obtained after step E contains at least 50% by weight ßV-crystals related to the crystalline content.

2. A process according to claim 1, **characterised in that** the mixing according to step B takes place in a mixer, preferably in a mixer with static mixing elements.

3. A process according to claim 1 or 2, **characterised in that** the expansion device is a spray tower, preferably with an expansion nozzle with a diameter from 1.0 to 2.0 mm.

4. A process according to any one of the preceding claims, **characterised in that** the supercritical fluid is selected from the group carbon dioxide or short-chain alkanes with 1 to 4 carbon atoms.

5. A process according to any one of the preceding claims, **characterised in that** the gas used is carbon dioxide and it is preferably used at a pressure between 5.000 and 20.000 kPa, particularly preferably 11.000 kPa.

6. A process according to any one of the preceding claims, **characterised in that** the pulverulent particles obtained have a size between 1 µm and 50 µm, preferably 10 µm - 50µm.

7. A process according to any one of the preceding claims, **characterised in that** the storage according to process step E is carried out at a temperature from 15°C to 25°C.

8. A process according to any one of the preceding claims, **characterised in that** the storage according to process step E takes place over a time period of at least 2 days, preferably 14 days.

9. A process according to any one of the preceding claims, **characterised in that** a dissolving chamber is used in step A for heating the preliminary substance and it tempers the preliminary substance to a temperature > 40°C.

10. A process according to any one of the preceding claims, **characterised in that** in another process step, at least 0.1 % by weight of the pulverulent particles obtained are added to a chocolate mass and the chocolate mass is crystallized out.

11. A process according to any one of the preceding claims, **characterised in that** use is made of chocolate masses containing only cocoa butter as a fat content or of masses in which cocoa butter is partially or totally replaced by other vegetable fats.

## Revendications

1. Procédé de préparation de germes cristallins pour produits à base de chocolat, lequel procédé comporte les étapes suivantes :
A) chauffer du beurre de cacao jusqu'à ce qu'il se forme un liquide, ou chauffer une masse de chocolat jusqu'à ce qu'il se forme une suspension ou un liquide ;
B) mélanger la masse fondue avec un fluide supercritique sous pression ;
C) laisser le mélange obtenu se détendre dans un dispositif d'expansion, de manière à ce qu'il se forme, à partir du beurre de cacao ou du chocolat, des particules de poudre ;
D) et séparer ces particules de poudre d'avec le gaz ;
et lequel procédé est **caractérisé en ce**ci :
E) on laisse les particules de beurre de cacao ou de poudre de chocolat ainsi obtenues séjourner à une température de 15 à 25 °C pendant un laps de temps d'au moins deux jours, et en outre :
- les opérations des étapes A à D sont menées en mode continu,
- le rapport de mélange de la masse fondue au fluide supercritique, basé sur les masses du fluide et de la matière fondue, vaut de 1/1 à 2/1,
- et la poudre de chocolat ou de beurre de cacao obtenue après l'étape (E) contient des cristaux de la forme βV en une quantité représentant au moins 50 % du poids de la fraction cristalline.

2. Procédé conforme à la revendication 1, **caractérisé en ce que** l'opération de mélange de l'étape B est réalisée dans un mélangeur, de préférence dans un mélangeur comportant des organes mélangeurs statiques.

3. Procédé conforme à la revendication 1 ou 2, **caractérisé en ce que** le dispositif d'expansion est une tour de pulvérisation, de préférence munie d'une buse d'expansion de 1,0 à 2,0 mm de diamètre.

4. Procédé conforme à l'une des revendications précédentes, **caractérisé en ce que** le fluide supercritique est choisi dans l'ensemble formé par le dioxyde de carbone et les alcanes à chaîne courte, comportant 1 à 4 atomes de carbone.

5. Procédé conforme à l'une des revendications précédentes, **caractérisé en ce que** le gaz employé est du dioxyde de carbone, utilisé de préférence sous une pression de 5 000 à 20 000 kPa, en particulier de 11 000 kPa.

6. Procédé conforme à l'une des revendications précédentes, **caractérisé en ce que** les particules pulvérulentes obtenues présentent une taille de 1 à 50 µm, et de préférence de 10 à 50 µm.

7. Procédé conforme à l'une des revendications précédentes, **caractérisé en ce que** le séjour de l'étape E du procédé se déroule à une température de 15 à 25 °C.

8. Procédé conforme à l'une des revendications précédentes, **caractérisé en ce que** le séjour de l'étape E du procédé se prolonge durant un laps de temps de moins deux jours, et de préférence de 14 jours.

9. Procédé conforme à l'une des revendications précédentes, **caractérisé en ce qu'**on utilise dans l'étape A, pour le chauffage de la matière de départ, une cuve de dissolution où la matière de départ est amenée pour tempérage à une température de plus de 40 °C.

10. Procédé conforme à l'une des revendications précédentes, **caractérisé en ce que**, dans une autre étape de procédé, on ajoute à une masse de chocolat au moins 0,1 % en poids de particules pulvérulentes ainsi obtenues, et on laisse la masse de chocolat cristalliser.

11. Procédé conforme à l'une des revendications précédentes, **caractérisé en ce qu'**on utilise des masses de chocolat qui ne contiennent comme matières grasses que du beurre de cacao, ou des masses dans lesquelles tout ou partie du beurre de cacao est remplacé par d'autres graisses végétales.
